# EUROPEAN PATENT SPECIFICATION

(11) **EP 3 501 816 B1**
(45) Date of publication and mention of the grant of the patent: **23.02.2022**
(21) Application number: 18215513.5
(22) Date of filing: 21.12.2018
(51) Int. Cl.: B32B 7/12, B32B 23/08, B32B 27/08, B32B 27/10, B32B 27/16, B32B 27/32, B32B 27/36, B32B 37/00

(54) **BARRIER FILM AND LAMINATED PACKAGING MATERIAL COMPRISING THE FILM AND PACKAGING CONTAINER MADE THEREFROM**
SPERRFOLIE UND LAMINIERTES VERPACKUNGSMATERIAL MIT DER FOLIE UND DARAUS HERGESTELLTER VERPACKUNGSBEHÄLTER
FILM DE BARRIÈRE ET MATÉRIAU D'EMBALLAGE STRATIFIÉ COMPRENANT LE FILM ET RÉCIPIENT D'EMBALLAGE RÉALISÉ À PARTIR DE CEUX-CI

(30) Priority: 22.12.2017 EP 17210349; 24.01.2018 EP 18153156
(43) Date of publication of application: 26.06.2019
(73) Proprietor: Tetra Laval Holdings & Finance S.A., 1009 Pully (CH)
(72) Inventor: LORENZETTI, Cesare, 234 39 Lomma (SE)
(74) Representative: Tetra Pak - Patent Attorneys SE

(56) References cited:
- WO-A1-2016/032330
- WO-A1-2017/072123
- JP-A- 2011 116 399
- US-A1- 2017 136 747

## Description

### Technical field

The present invention relates to a laminated packaging material for packaging of liquid food products, comprising a bulk layer of paper or paperboard or other cellulose-based material, a first outermost liquid tight, heat sealable thermoplastic layer, a second innermost liquid tight, heat sealable thermoplastic layer arranged on the inside of the bulk layer to be in direct contact with the filled food product, and a barrier layer laminated between the bulk layer and the second innermost layer. The invention also relates to a laminated packaging material comprising such barrier films, in particular intended for liquid food packaging.

Furthermore, the invention relates to a packaging container comprising the laminated packaging material or being made of the laminated packaging material. The invention also relates to a method of manufacturing the packaging material.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most polymeric gas barrier materials. The conventional aluminium-foil based packaging laminate for liquid food aseptic packaging is still the most cost-efficient packaging material, at its level of performance, available on the market today.

Any other material to compete with the Alufoil-based materials must be cost-efficient regarding raw materials, have comparable food preserving properties and have a comparably low complexity during converting into a finished packaging laminate.

Among the efforts of developing non-aluminium-foil materials for liquid food carton packaging, there is also a general incentive towards developing pre-manufactured films or sheets having high and multiple barrier functionalities, i.e. not only oxygen and gas barrier but also water vapour, chemical- or aroma-substance barrier properties, which may replace the aluminium-foil barrier material, of the conventional laminated packaging material, and adapt it to the conventional Al-foil process for lamination and manufacturing.

All hitherto suggested such barrier films each have at least one drawback, when compared to the conventional aluminium foil, for use in liquid paperboard packaging of liquid food. One important drawback may be the high manufacturing costs of such a barrier film. Another, that it is not possible to directly just replace an aluminium foil, and also avoiding complex adaptations having to be made in the lamination process.

Publication No. WO2017/072123 A1 relates to a laminated packaging material, having outer- and innermost layers of liquid tight, heat sealable polymers, without an aluminium foil barrier but comprising a polymer film substrate coated with a barrier-coating of diamond-like carbon. The publication discloses that the polymer film substrate may be a film based on polyesters, such as PEF.

Publication No.US2017/0136747 relates to articles and multilayer structures having a sealant layer from a PTF polymer having heat sealing properties.

Publication No. WO2016/032330 A1 relates to a method for manufacturing of oriented films and multilayer structures from PEF.

Publication No. JP2011116399 A relates to a heat-insulating paper vessel, comprising a layer of PET.

### Summary

It is, accordingly, an object of the present invention to provide good laminating packaging materials without an aluminium foil, having good package integrity, food preserving barrier properties as well as resistance to leakage in filled, formed and sealed paperboard containers for liquid or semi-liquid food products.

It is another object of the invention to maximize the amount of materials in such a laminated packaging material being produced from renewable, i.e. biobased sources.

It is a further general object of the invention to provide packaging materials for oxygen-sensitive products, such as laminated packaging materials for liquid, semi-solid or wet food products, which do not contain aluminium foil but still can provide packages filled with the food product, having good gas and other barrier properties suitable for long-term, aseptic packaging at reasonable cost.

Yet a further object of the invention is to provide a cost-efficient, non-foil, paper- or paperboard-based and heat-sealable packaging laminate having good gas and water vapour barrier properties and good internal adhesion between its laminated layers, for the purpose of manufacturing aseptic packaging containers for long-term storage of liquid foods at maintained nutritional quality under ambient conditions.

These objects are attainable according to the present invention by the laminated packaging material, the packaging container and the method of manufacturing the packaging material, as defined in the appended claims.

According to a first aspect of the invention, there is provided a laminated packaging material for packaging of liquid food products, comprising a bulk layer of paper or paperboard or other cellulose-based material, a first outermost liquid tight, heat sealable thermoplastic layer, arranged on the outside of the bulk layer to constitute the outside of a package formed from the packaging material, a second innermost liquid tight, heat sealable thermoplastic layer arranged on the inside of the bulk layer to be in direct contact with the filled food product, and a barrier layer comprising a polyester selected from the group consisting of polyethylene-2,5-furandicarboxylate (PEF) and polytrimethylene furandicarboxylate (PTF), and a blend or a co-polymer thereof, laminated between the bulk layer and the second, innermost liquid tight, heat sealable thermoplastic layer.

Especially, the barrier layer is laminated to an adhesion-promoting layer, forming part of a laminating layer, which is bonding the barrier layer to the bulk layer and the adhesion-promoting layer comprising a blend of a thermoplastic polymer with an epoxidized natural oil, an epoxidized natural rubber or a cyclic carbonate derivative of an epoxidized natural oil or rubber.

The selected polyester materials exhibit excellent gas barrier properties, and moreover water vapour barrier properties, which is important in the field of long shelf-life, liquid packaging. Furthermore, oriented films from the materials have good mechanical properties, such as high tensile strength, elongation at break e t c, to be suitable for lamination into a carton-based laminated packaging material for liquid and beverage packaging. Moreover, the polyester materials have good resistance to chemicals and good barrier properties towards migration of low-molecular substances, aroma substances, free fatty acids and the like. Accordingly, it is now realised that a layer or film thereof may alone, without any further barrier coatings or additions, fully replace an aluminium-foil barrier, and provide an equal, or even improved laminated, carton-based packaging material for liquid food products.

According to a second aspect, there is provided a packaging container for liquid food products, comprising the laminated packaging material. Packaging containers may be manufactured from the laminated packaging material partly or entirely. Thanks to the good barrier properties and mechanical strength of the laminated packaging material, the packaging containers may also have excellent barrier properties for long-term aseptic, ambient storage, as well as good integrity properties, both regarding laminate-layer adhesion and seal-strength of the formed, filled and sealed package.

According to a further embodiment, the packaging container may be formed from the laminated packaging material and partly sealed, filled with liquid or semi-liquid food and subsequently and finally completely sealed, by sealing of the packaging material to itself, optionally in combination with a plastic opening or top part of the package.

According to a third aspect, a method for manufacturing of the laminated packaging material is provided. The method comprises the steps, in any order, of providing a bulk layer of paper or paperboard or other cellulose-based material, applying a first outermost liquid tight, heat sealable thermoplastic layer onto the outer side of the bulk layer, laminating a barrier layer comprising a polyester selected from the group consisting of polyethylene-2,5-furandicarboxylate (PEF), polytrimethylene furandicarboxylate/ furanoate (PTF), a blend or a co-polymer thereof, to the inner side of the bulk layer of paper or paperboard or other cellulose-based material, by melt (co-)extruding an interjacent laminating layer of a thermoplastic polymer between the bulk layer and the barrier layer, wherein the barrier layer is laminated to an adhesion-promoting layer, forming part of a laminating layer, which is bonding the barrier layer to the bulk layer, the adhesion-promoting layer comprising a blend of a thermoplastic polymer with an epoxidized natural oil, an epoxidized natural rubber or a cyclic carbonate derivative of an epoxidized natural oil or rubber, and pressing together, and
applying a second innermost liquid tight, heat sealable thermoplastic layer on the inner side of the barrier layer.

The barrier layer may be laminated into the packaging material structure as a pre-manufactured, oriented film layer, or by means of (co-) extrusion laminating or (co-)extrusion coating. The barrier layer may be applied as a single layer of polyester, or as a multilayer film or extrudate, into the structure. The barrier layer is laminated to the adjacent layers in the packaging material laminate structure by means of melt extrusion lamination with an adhesion-promoting composition. Further, the innermost liquid tight and heat sealable layer of thermoplastic polymer may be applied as a layer in a pre-manufactured oriented film or a as a (co-)extrusion coated (multi-)layer.

### Detailed description

The polyester comprised in the barrier layer may be a polymer obtained by a condensation reaction between furandicarboxylic acid or its dimethyl ester and diols such as ethylene glycol, 1,3-propanediol (trimethylene glycol), 2-methyl-1,3-propanediol, 1,4 butanediol, diethylene glycol, neopentyl glycol, tetramethyl cyclobutanediol or isosorbide.

Preferred polyesters are polyethylene furandicarboxylate (PEF) and poly trimethylene furandicarboxylate (PTF), the latter also called polypropylene furandicarboxylate (PPF). These polymers can contain an additional monomer preferably chosen from those above.

A barrier layer comprising such polyesters may be applied into a laminated packaging material according to the invention, in the form of a pre-manufactured oriented film, such as a blown film or a cast, oriented film. Both these types of film are manufactured by extruding the molten polyester composition into a sheet of film, which is subsequently stretched into a considerably thinner but stable film. It means that the film will not shrink or deteriorate due to changes of conditions in the environment around it, or due to ageing.

The film may be oriented either mono-axially, i.e. in the machine direction, or bi-axially in both the machine direction (MD) and the cross-direction (DC). Bi-axial orientation may be performed by sequential orientation in a tenter frame, first in one direction and second in a perpendicular direction, such as first MD-wise and secondly CD-wise, or by simultaneous bi-axial orientation process, thus stretching the film in perpendicular directions at the same time. The film may be oriented at a ratio from 2.2 to 5 in the machine direction and from 2.2 to 5 in the cross direction, more preferably from 3.5 to 4.5.

A mono-oriented film is oriented only or mainly in the machine direction at a ratio from 2.2 to 5.2, preferably from 4.2 to 5.2.

The stretching ratio in a slow crystallizing polymer film such as PEF may be determined by measuring the total crystallinity by X-ray Diffraction analysis (XRD) or Differential Scanning Calorimetry analysis (DSC) or a combination of both these techniques. Stretching ratio may also be determined by FT-IR and Ellipsometry. All the mentioned techniques require calibration with reference films produced at various stretching ratios. In case of bioriented films, the orientation can be carried out in a Tenter-frame type equipment of the simultaneous type or sequential type.

Extrusion cast films are typically made by extruding a sheet or film, by melting polymer granules into a homogenous melt and forcing it through an elongated slit die by an extruder screw, to form a molten curtain or precursor film, onto a cooling surface, such as the surface of a cooled metal roller, and thereafter subjecting the cooled or partially cooled film to orientation operations.

Orientation may also be conveniently carried out by using film blowing double or triple bubble type equipments, in connection to the melt extrusion of a tubular film through an annular die (also by feeding the molten polymer by an extruder screw) and simultaneously blowing air or gas inside the film tube, such that it expands in all directions into a "bubble" or balloon. Such process and equipment is described for example in US patent No. 5,298,202.

The melt extrusion temperature of these polyesters is suitably from 230 to 290 °C.

Orientation is carried out after cooling (and if necessary further reheating) to a suitable elevated temperature such as from 70 to 130 °C.

In order to minimise or avoid shrinking of the oriented film, it is allowed to set or relax in a further, brief heating operation while tensioning the film. In the process of film blowing, this further heat setting operation may form an integral part of the bubble expansion process, alternatively film relaxation can be carried out by re-inflating the film tube and keeping it at sufficiently high temperature. This last process is known as triple bubble orientation technology and further details can be found in WO2013063310.

Typical thicknesses of oriented films for the purpose of barrier layers in packaging material may be from 6 to 30 µm, such as from 8 to 20 µm. The oriented films are characterised by having a high degree of crystallinity, and excellent mechanical properties. The films may thus have a tensile strength of at least 100 MPa (ISO527) and a tensile modulus of at least 2000 MPa, such as from 2000 to 12000 MPa. Further, the films are flexible and not brittle, exhibiting an elongation at break of at least 25 % (ISO527).

By co-extruding several molten streams, by several separate extruder screws, through a common feedblock into adjacent layers or sheets, a multilayer structure film may be formed by these same processes, whereby the polymers or polymer compositions of the different layers or melt streams may have different although compatible, or only slightly different compositions. Thus, layers with differing functionality may be efficiently laminated to each other, already as pre-manufactured films which may be further laminated to a base layer, such as paperboard or another cellulose-based bulk layer.

According to an embodiment, a thin film of a single polyester barrier layer should preferably be 12 µm or below, such as from 10 to 12 µm. At higher thickness of the film substrate, the tearing and cutting properties of the laminated packaging material may be impaired because of the higher strength of the material. Oriented films usually exhibit an increased strength and toughness against tearing or cutting through the film, and when included in laminated packaging materials such films can cause difficulties in opening of a package, unless an indentation or other contrivance for initiating the tear is provided. By selecting as thin as possible polymer film substrates, the openability of a subsequently laminated packaging material will not be impaired, in comparison to laminated packaging materials in which the barrier materials are more brittle or wherein the polymer materials are less strong and entirely made by melt extrusion coating and melt extrusion lamination.

The oriented polyester barrier films of the invention are robust regarding mechanical properties, and have inherent high temperature resistance and relatively good resistance to chemicals and moisture.

The polyester barrier film or layer of the invention may have a primer or an adhesion-promoting coating on at least one side. The purpose of the primer or adhesion-promoting coating is to provide better bonding to adjacent layers when laminating the film into a laminated packaging material. For example, it makes it possible to create or improve the adhesion strength to an adjacent extrusion-coated polymer, such as a polyolefin-based polymer layer and the contacting surface thereof.

The barrier layer is laminated to, on at least one side, an adhesion-promoting layer, forming part of a laminating layer, which is bonding the barrier layer to the bulk layer and/or forming a second bonding layer to the innermost, liquid tight, heat sealable layer of thermoplastic polymer and/or forming a third bonding layer to a second barrier layer, which may be combined with an outermost heat sealable layer in a pre-manufactured orientated film.

A suitable primer may be a composition comprising a compound selected from the group of aminosilanes and polyethyleneimines, examples of them can be found in EP0359017 or US5453326 respectively. Preferably adhesion primers are applied in line with film extrusion, for instance they could be applied after the MD orientation and before TD stretching of a typical tenter-frame film manufacturing plant. Such primers adhere well to polyolefins, such as polyethylene polymers, if a temperature above 280, such as above 290, such as above 300, such as above 310 °C, is reached in melt extrusion coating or lamination.

A further type of primer coating, integral with a pre-manufactured film, may be a very thin vapour deposition-coated primer of a diamond-like carbon (DLC). As thin a coating thickness as from 2 to 5 nm, may suffice to create excellent bonding properties to an adjacent, melt extruded polyolefin layer, such as an intermediate bonding layer between the bulk paperboard and the barrier PEF film, or between the barrier PEF film and an innermost heat sealable polyolefin layer. Thus, the purpose of such a vapour deposited coating is merely to create sufficient adhesion by a very quick, surface-treating kind of carbon coating.

The laminated packaging material may further comprise a first outermost liquid tight, heat sealable polyolefin layer and a second innermost liquid tight, heat sealable polyolefin layer. Suitable thermoplastics for the outermost and innermost heat sealable liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. According to a preferred embodiment, the outermost heat sealable and liquid-tight layer is an LDPE, while the innermost heat sealable, liquid-tight layer is a blend composition of m-LLDPE and LDPE for optimal lamination and heat sealing properties.

The laminated packaging material may thus comprise a bulk layer of paper or paperboard, a first outermost liquid tight, heat sealable polyolefin layer, a second innermost liquid tight, heat sealable polyolefin layer and, arranged on the inner side of the bulk layer of paper or paperboard, towards the inside of a packaging container made from the packaging material, between the bulk layer and the innermost layer, said barrier layer.

The barrier layer is bonded to the bulk layer by an intermediate adhesive, or thermoplastic polymer bonding layer, i.e. a so-called laminating layer, thus binding the barrier layer to the inner surface of the bulk layer (inner being the direction towards the interior of a packaging container made from the material). The laminating layer may be a polyolefin layer, or a layer of a polyethylene-based polyolefin copolymer or a polyethylene blend, including in the majority ethylene monomer units. Preferably, the bulk layer is bonded to the barrier film by melt extrusion laminating the bonding polymer layer between a web of the bulk layer and a web of the film layer, and simultaneously pressing the three material layers together while being forwarded through a lamination roller nip, thus providing a laminated structure, i.e. by extrusion laminating the bulk layer to the barrier film or layer.

The same thermoplastic polyolefin-based materials, as listed regarding the outermost and innermost layers, and in particular polyethylenes, may be suitable in such bonding layers interior of the laminated material, i.e. laminating layers between a bulk or core layer, such as paper or paperboard, and the barrier film. In an embodiment, the thermoplastic laminating layer may be a polyethylene layer, such as a low density polyethylene (LDPE) layer.

The polyester barrier layer may be bonded to the innermost layer by means of a primer, or an adhesion-promoting layer, such as an adhesive polymer, as described above.

According to a preferred embodiment, good adhesion between the barrier layer and adjacent thermoplastic polyolefin layer is created by a blend of a matrix polyolefin layer and an added amount of an epoxidized compound selected from the group consisting of epoxidized natural oil, such as epoxidized soybean oil (ESBO) and epoxidized linseed oil (ELO), epoxidized natural rubber and cyclic carbonate derivatives of epoxidized natural oil or rubber. Alternative natural oils that may be epoxidized and used in a similar way for this purpose, are for example tung oil, rapeseed oil, canola oil and olive oil. Epoxidized elastomers or rubbers provide a further alternative to epoxidized natural oils, such as epoxidized poly-1,3-butadiene, epoxidized poly-1,2-butadiene, epoxidized EPDM (ethylene-propylene-diene-monomer co-polymers), and epoxidized natural rubber (i.e. epoxidized polyisoprene). Such epoxidized elastomers may be more or less based on renewable raw materials, although being synthetically made. Of course, natural raw materials are preferred from an environmentally sustainable perspective, and thus an epoxidized natural rubber as harvested from the rubber tree, is preferred among the alternative epoxidized elastomers. According to a further embodiment an epoxidized compound, a cyclic carbonate derivative of an epoxidized natural oil or epoxidized natural rubber, is used as an adhesion promoting layer. The cyclic carbonate derivatives are preferable, because they provide even better adhesion to adjacent layers than the mere corresponding epoxidized compounds. The cyclic carbonate derivatives are made by contacting epoxidize compounds, such as epoxidized natural oil or natural rubber, with carbon dioxide. Such an adhesion-promoting composition may be applied as a bonding layer between a polyester barrier layer and adjacent polymer and barrier layers, and provide excellent interlayer adhesion bonding at a fairly low cost, compared to other adhesive polymers, as those described above. A great advantage of such an epoxidized natural oil or rubber, such as ESBO or ELO, blended into a polyolefin composition is, that also these adhesion-promoting layer materials can be fully bio-based, i.e. based on renewable sources of plant origin at 100 %.

By adding ESBO or ELO to e.g. polyethylene, it acts as a compatibilizer and enables adhesion between a melt extrudate layer of the polyethylene composition and a e.g. a PEF barrier layer. This effect is obtained at a concentration as low as 500 ppm by weight (0.05 wt%) of ESBO based on the polyethylene.

In the preparation of laminated materials suitable for liquid food packaging a concentration above 1000 ppm (0.1 wt%) is preferable while a concentration above 5000 ppm (0.5 wt%) does not normally benefit adhesion nor other process parameters. Thus, the concentration of an ESBO or ELO additive in a polyolefin composition for an adhesion-promoting layer, should be from 0.1 to 0.5 wt %.

It has also been observed that improved barrier properties towards migrating low-molecular compounds, such as free fatty acids or sulfites (present in wines), are provided by laminating a PEF -type polyester barrier layer by adhesion-promoting layers of a polyethylene-based composition with an epoxidized natural oil, such as ESBO.

Similarly, adhesion between PEF type barrier layers and ESBO containing compositions such as above, show remarkable robustness and no delamination is observed upon exposure of the laminated material to fatty acids and sulfites, otherwise notoriously affecting adhesion in multilayer packaging material structures.

The corresponding use of ESBO and similar epoxidized compounds to adhere polyolefins, such as polyethylene PE, to PET is not satisfactory as adhesion is lost under the influence of sulfites, free fatty acids and other migrating molecules over time.

What has been surprisingly found is that the same does not occur when the polyester film is PEF or PTF.

The mechanism behind this effect is not fully understood, but it is believed to arise from the different chemical structure of PEF/PTF and possibly by the oxygen bearing furan moieties present in those polymers, that may interact in a different way with epoxides.

The ESBO-containing adhesion-promoting layer, should preferably be melt extruded at temperatures above 290, such as above 300, such as above 310 °C. The melt extrusion temperature may be decreased if the extrudate is contacted with an atmosphere containing ozone, before contacting the surfaces to be laminated.

The minimum thickness of the adhesion-promoting layer material may vary from 4 to 6 µm. If an entire bonding layer is made of the adhesion-promoting polymer or polymer composition, such an adhesion-promoting layer may be thicker, such as up to 12, such as up to 15 µm.

A pre-applied primer may be applied at much lower amounts, such as from 0.05 to 0.2 g/m², dry weight.

In addition, improved adhesion may be achieved by treating the polyester barrier layer/film with an atmospheric plasma treatment or modified corona treatment in the presence of a gas to provide grafting of the barrier film surface (such as described in for example FR2873705, EP1023366, or WO2013041312). This technique consists in treating the polyester barrier film with a dielectric barrier discharge (DBD) in presence of an appropriate mixture of gases. The surface may be provided with surface grafts from nitrogen-containing groups such as amines, amides and imides, by such a brief plasma treatment (milliseconds), that will enable good bonding to a molten extruded polymer, which is applied to the surface after the treatment. A treated barrier film shows thus after treatment improved adhesion toward various types of polyolefins, such as polyethylene, applied in the molten state on to the treated film surface. Preferably, the polyethylene then should be melt applied at a temperature above 280, such as above 300, such as above 310 °C, in order to obtain the required adhesion for liquid packaging, i.e. wet, high humidity, conditions.

In a further embodiment, the innermost liquid-tight and heat sealable thermoplastic polymer may alternatively be a polyester selected from the group consisting of polyethylene-2,5-furandicarboxylate (PEF) and polytrimethylene furandicarboxylate (PTF), a blend and a co-polymer of any of these polyesters. In such a case, the PEF- or PTF-based polymer layer will have direct contact with the food product to be packed in a packaing container made of the material. It may then be applied by an extrusion coating process or first formed into a film, which is then laminated to the bulk layer. A PEF- or PTF-based film for direct contact with food, must comprise a heat sealable layer, such as a layer of PEF featuring both a reduced melting point and reduced crystallinity. For achieving this purpose, it is suitable to incorporate an additional monomer in the PEF structure, such as monomers capable of increasing the glass transition temperature, Tg, of the polymer, and which are obtainable from renewable resources. Particularly suitable such monomers are isosorbide and cyclobutanediol.

In a particular embodiment, a combined film comprising a barrier layer of a polyester selected from the group consisting of polyethylene-2,5-furandicarboxylate (PEF) and polytrimethylene furandicarboxylate (PTF), a blend and a co-polymer of any of these polyesters, having a high degree of crystallinity, is manufactured in an oriented barrier film, together with a second, heat sealable layer of the same film, of a polyester selected from the group consisting of polyethylene-2,5-furandicarboxylate (PEF) and polytrimethylene furandicarboxylate (PTF), a blend and a co-polymer of any of these polyesters, being less crystalline (more amorphous in nature) and with a melting point to be suitable in a heat sealing process.

In another embodiment, two such relative to each other different layers, each of a different polyester selected from the group consisting of polyethylene-2,5-furandicarboxylate (PEF) and polytrimethylene furandicarboxylate (PTF), a blend and a co-polymer of any of these polyesters, may be co-extrusion coated onto a bulk layer, with a suitable adhesion-promoting polymer layer as the contacting and bonding layer towards the bulk layer of paperboard or other cellulose-based material. The barrier portion of the co-extruded multilayer having a higher degree crystallinity, while the heat sealable portion is different and has lower degree of crystallinity, or is even amorphous, and has a lower melting point.

In a further embodiment, the bulk layer of the above depicted laminate structures have, on the other side, a conventional, liquid tight, heat sealable polyolefin as the outermost layer. In an alternative, further embodiment, the outermost layer may also be a polyester of the same or similar type as the innermost layer, on the inside.

It has been seen that the laminated packaging material according to the invention has excellent integrity, with excellent adhesion between the adjacent layers within the laminated construction and high quality and durability of the barrier layer. Especially, for the packaging of liquids, and wet food, it is important that the inter-layer adhesion within the laminated packaging material is maintained also under wet packaging conditions.

With the term "long-term storage", in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. More specifically, it defines the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the quality of the individual material layers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, wine, soups, jalapenos, tomatoes, sauce (such as pasta sauce), beans and olive oil are some nonlimiting example of food products contemplated.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that he package has barrier properties towards gases and vapours, such as towards oxygen gas, in order to keep its original taste and nutritional value, such as for example its vitamin C content.

With the term "bulk layer" is normally meant the thickest layer or the layer containing the most material in a multilayer laminate, i.e. the layer which is contributing most to the mechanical properties and the dimensional stability of the laminate and of packaging containers folded from the laminate, such as paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties and dimensional stability.

Thickness measurements may be performed by Transmission Electronic Microscopy using a Titan 80-300, FEI equipment. Samples are prepared by ultramicrotomy on an EM UC6 Microtome from Leica.

OTR was measured with Oxtran 2-60 (Mocon Inc.) equipment based on coulometric sensors, with a standard deviation of the results being ±0,5 cm³/m²/day.

The method for determining OTR identifies the amount of oxygen per surface and time unit at passing through a material at a defined temperature, given atmospheric pressure, and chosen driving force.

Adhesion measurements are performed at room temperature with a 180° degrees peel force test apparatus (Telemetric Instrument AB), 24 h after the LDPE lamination. Peeling is performed at the barrier layer/bonding layer interface, the peel arm being the barrier film. When needed, distilled water droplets are added to the peeled interface during peeling to assess the adhesion under wet conditions, i.e. the conditions when the laminated packaging material has been saturated with migrating moisture through the material layers, from the liquid stored in a packaging container made from the laminated material, and/or by storage in a wet or highly humid environment.The given adhesion value is given in N/m and is an average of 6 measurements.

A dry adhesion of more than 200 N/m ensures that the layers do not delaminate under normal package manufacturing conditions, e.g. when bending and fold-forming the laminated material. A wet adhesion of this same level ensures that the layers of the packaging laminate do not delaminate after filling and package formation, during transport, distribution and storage.

### Examples and description of preferred embodiments

In the following, preferred embodiments of the invention will be described with reference to the drawings, of which:
Fig. 1a, 1b and 1d show each different variants of a schematic, cross-sectional view of a laminated packaging material according to the invention,
Fig. 2a, 2c show each further variants of a schematic, cross-sectional view of a laminated packaging material according to the invention,
Fig. 3 shows schematically an example of a method, for manufacturing the laminated packaging material,
Fig. 5a, 5b, 5c and 5d are showing typical examples of packaging containers produced from the laminated packaging material according to the invention, and
Fig. 6 is showing the principle of how such packaging containers are manufactured from the packaging laminate in a continuous, roll-fed, form, fill and seal process.

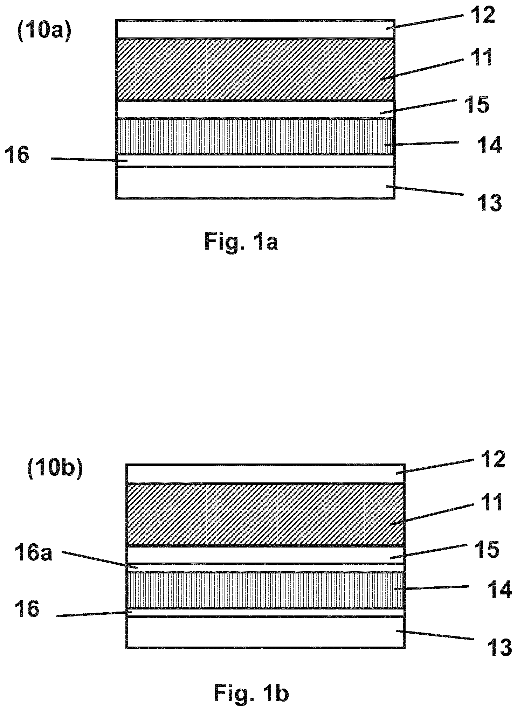

In Fig. 1a, a laminated packaging material 10a of the invention, for liquid carton packaging, is shown, in which the laminated material comprises a bulk layer 11 of paperboard having a bending force of 320 mN, and an outer liquid tight and heat sealable layer 12 of polyolefin applied on the outside of the bulk layer 11, which side is to be directed towards the outside of a packaging container produced from the packaging laminate. The polyolefin of the outer layer 12 is a conventional low density polyethylene (LDPE) of a heat sealable quality, but may include further similar polymers, including LLDPEs. An innermost liquid tight and heat sealable layer 13 is arranged on the opposite side of the bulk layer 11, i.e. the layer 13 will be in direct contact with the packaged product. The thus innermost heat sealable layer 13, which is to form very strong seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE).

The bulk layer 11 is laminated to an oriented barrier film 14, comprising a polyester selected from the group consisting of polyethylene-2,5-furandicarboxylate (PEF) and polytrimethylene furandicarboxylate (PTF), a blend and a co-polymer thereof. The first, outer side of the film 14 is laminated to the bulk layer 11 by an intermediate bonding layer 15 of an adhesion-promoting polyolefin-based adhesive polymer, in this example by a low density polyethylene (LDPE) thoroughly blended with 0.3 wt % of ESBO.

In particular, an ESBO adhesion-promoting agent can be either melt compounded with LDPE or supplied in form of a masterbatch or concentrate directly during the manufacturing of the packaging material. A 5% masterbatch of ESBO in LDPE proved particularly convenient for the latter purpose.

The intermediate bonding layer 15 is formed by means of extrusion laminating the bulk layer 11 and the barrier film 14 to each other. The thickness of the intermediate bonding layer 15 is from 12-18 µm, in this case about 15 µm.

The innermost heat sealable layer 13 may consist of two or several part-layers of the same or different kinds of LDPE or LLDPE or blends thereof. In this example, the heat sealable layer 13 comprises a blend of about 30 wt% LDPE with about 70 wt% of mLLDPE, which is co-extrusion coated together with an adhesion-promoting layer 16 of a low density polyethylene (LDPE) thoroughly blended with 0.3 wt % of ESBO for providing a good bonding strength to the inner side of the barrier film 14.

The laminate structure according to this example is thus optimised regarding bio-based content, since the polyethylene in the various layers used may be 100 % biobased, and also the adhesion-promoting agent being an epoxidized plant substance and the cellulose-based bulk layer.

Furthermore, the adhesion-promoting adhesive layer of ESBO in LDPE provides good adhesion, which improves over a time period of 24 hours after the extrusion lamination. It was noted that the high level of adhesion, above 200 N/m, was maintained also when packaging food products with high content of free fatty acid molecules, or wine containing sulphite. Such low-molecular compounds may trigger delamination by weakening the bonds at the interface between the different materials, and was expected also between PEF and LDPE layers. Such delamination, after a longer time of storage of the food product in the packaging container may cause loss of package integrity and damage the food product. However, with this laminate structure we have now found that if the film is an orientated PEF film, such as BOPEF, the adhesion provided by the LDPE-ESBO composition has a higher resistance towards migrating molecules of low molecular weight, such as free fatty acids and sulphites, when storing packages filled with juice and white wine at room temperature until failure occurred. Surprisingly, no failure was observed during 6 months.

In Fig. 1b, a laminated packaging material 10b of the invention, for liquid carton packaging, is shown, in which the laminated material structure and the materials are essentially the same as the one described in Fig. 1a, except for there being an intermediate bonding layer being separated into two layers, i.e. one intermediate bonding layer 15 of LDPE for bonding to the bulk layer, and a thinner adhesion-promoting layer 16a, from LDPE with 0.3 wt% of ESBO thoroughly mixed into it, for creating good adhesion between the barrier layer 14 and the intermediate bonding layer 15 of LDPE. The thickness of the adhesion-promoting layer 16a is about 6 µm, while the thickness of the intermediate bonding layer 25 of LDPE is about 10 µm in this case. Accordingly, also this resulting laminate structure may have a bio-based content of 100 %.

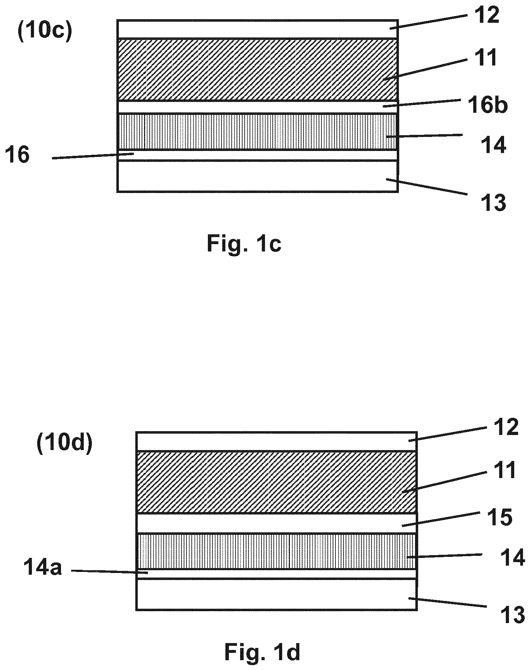

In Fig. 1d, a laminated packaging material 10d of the invention, for liquid carton packaging, is shown, in which the laminated material structure and the materials are essentially the same as the one described in Fig. 1a, except for the adhesion-promoting layer 16 being replaced by a pre-applied, i.e. wet applied and subsequently dried, primer coating 14a, thus forming an integral part of the barrier film 14, on its inner side, in order to provide good adhesion to the melt extrusion-coated innermost heat-sealable layer 13 of LDPE. This approach enables fewer material layers involved in the manufacturing of the packaging laminate. Although, the compounds used in such integral primers are not usually based on biological, renewable sources, the amount of substance is so low, that it does not impact the total bio-based content significantly. The dry matter amount of such primers is conventionally from 0.05 to 0.2 g/m² only, and preferably not exceeding 0.1 g/m².

Alternatively, a different approach (not shown) to this may taken, wherein the pre-primed side of such a barrier film 14-14a is turned in the other direction, and the intermediate bonding layer is a pure LDPE layer, which is melt extrusion laminating the primer surface of PEI to the bulk layer. On the inner side of the barrier layer, there may instead be applied an adhesion-promoting layer of a blend of LDPE and ESBO, as in any one of Fig. 1a-1c, for bonding to the innermost heat sealable layer 13.

In all the laminated material structures described in Fig. 1a -1b, and 1d, a good interlayer adhesion between a polyolefin layer and the barrier layer above a strenght of 200 N/m was obtained, thus enabling the production of packages having good package integrity.

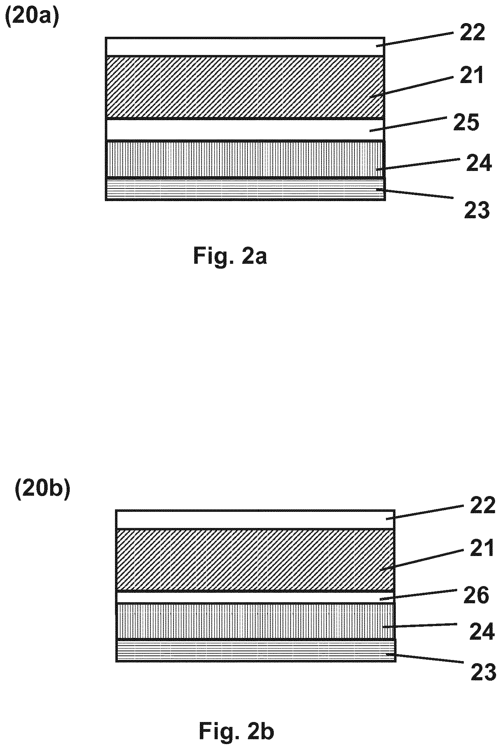

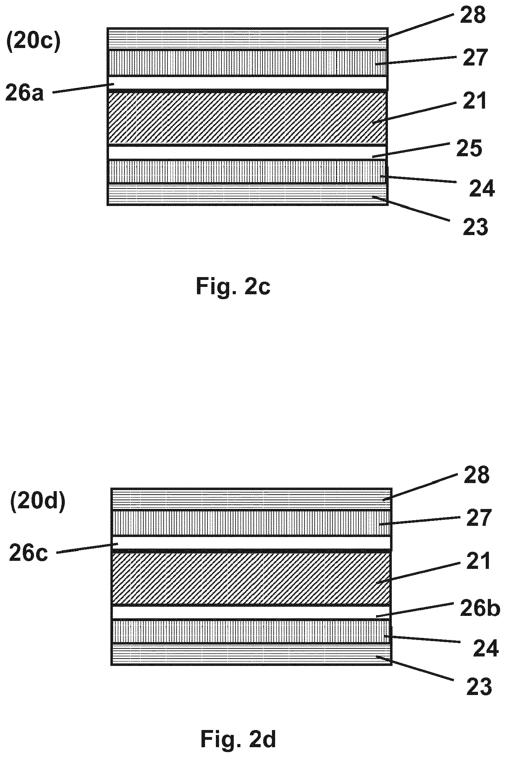

In Fig. 2a a laminated packaging material 20a of the invention, for liquid carton packaging, is shown, in which also the innermost liquid tight and heat sealable layer is a layer of PEF although different in morphology and melting behaviour from the PEF employed in the barrier layer. Thus, the laminated packaging material has a bulk layer 21 of paperboard, and an outermost, liquid tight and heat sealable layer 22 of LDPE. On the other, inner side of the bulk layer, there is arranged a barrier layer 24 of PEF, orientated to have a high degree of crystallinity, which further forms part of an oriented film (24-23), also having co-extruded and co-orientated, a further layer 23 of a heat sealable variant of PEF which is modified to be more amorphous in nature, and will constitute an innermost layer to be in direct contact with the filled food product, in a package made from the material.

The combined barrier and inside heat seal film 24-23 is laminated to the bulk layer 21 by an intermediate bonding layer 25 of an adhesion-promoting polyolefin-based polymer, by a low density polyethylene (LDPE) thoroughly blended with 0.3 wt % of ESBO. The adhesion-promoting polymer was obtained by melt compounding LDPE with a 5 wt-% masterbatch of ESBO in LDPE.

The intermediate bonding layer 25 is thus formed by means of extrusion laminating the bulk layer 21 and the barrier film 24-23 to each other. The thickness of the intermediate bonding layer 15 is from 12-18 µm, preferably about 15 µm.

In Fig. 2c, a laminated packaging material 20c of the invention, for liquid carton packaging, is shown, in which the laminated material structure and the materials are essentially the same as the one described in Fig. 2a, except for a combined film of barrier layer and heat sealable inside layer 24-23 being applied also on the outside of the bulk layer 21. Thus, a further, similar, or same, film with a barrier layer 27 combined with an outermost heat sealable layer 28 into a pre-manufacture orientated film, is laminated to the outside of the bulk layer in a similar way as described in Fig. 1a, i.e. by means of extrusion laminating a further intermediate bonding layer 26a of an adhesion-promoting polyolefin-based polymer, preferably by a low density polyethylene (LDPE) thoroughly blended with 0.3 wt % of ESBO. By keeping the the films for the in- and outside of the laminate the same, or very similar, the process of laminating them to the middle bulk layer, also by similar methods and material, will ensure high efficiency in manufacturing.

Also, in all the laminated material structures described in Fig. 2a -2d, a good interlayer adhesion above a strenght of 200 N/m was obtained, thus enabling the production of packages having good package integrity.

Generally, all the laminated material structures described in Fig. 1a-1d and Fig. 2a-2d provided very good barrier properties towards oxygen. Packages produced from the laminated structures of Fig. 1a-1d, had OTR values lower than 1.5, such as lower than 1.3 cc/package/day, atm., at 23°C and 50%RH. Furthermore, no deterioration of the oxygen barrier properties could be seen at higher levels of humidity, such as 80 %RH, i.e. the oxygen barrier remained the same.

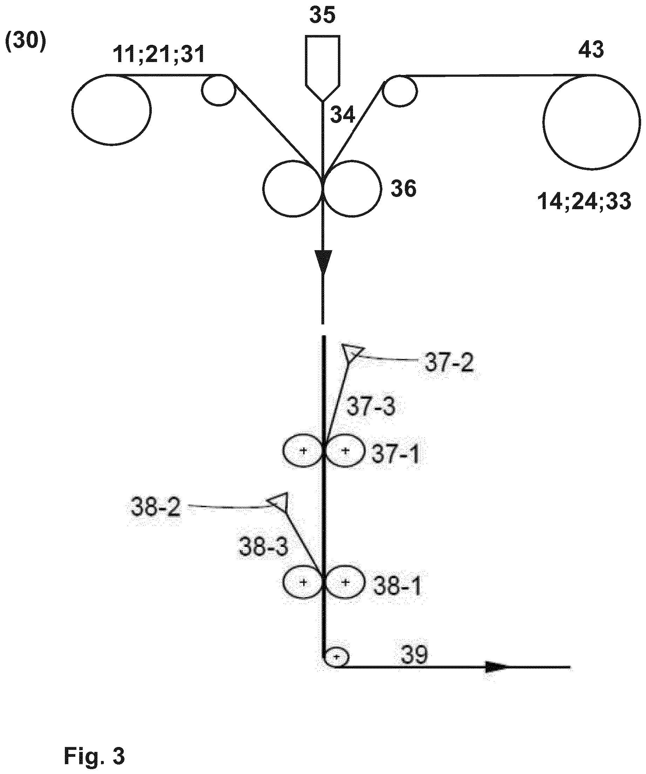

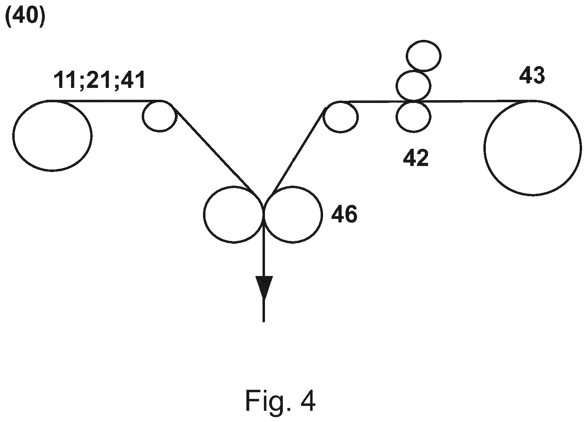

In Fig. 3, the lamination process 30 is shown, for the manufacturing of the laminated packaging materials 10a, 10b, 10d, 20a and 20c, of Fig. 1a, 1b, 1d, 2a and 2c, respectively, wherein the bulk layer 11,21,31 is laminated to the barrier film 14, 24, 33 by extruding an intermediate bonding layer of LDPE 34 from an extrusion station 35 and pressing together in a roller nip 36. The barrier film 14, 24; 33 may have a pre-applied primer coating 14a on the surface of the film as shown in Fig. 1c, whereby the primer coating is to be directed towards the innermost heat sealable layer when laminated at the lamination station 37-1. Thus, the laminated paper bulk and the barrier film passes a second extruder feedblock 37-2 and a lamination nip 37-1 , where an innermost heat sealable polymer layer 23; 37-3 is coated onto the barrier-film side of the paper-film laminate forwarded from 36. Finally, the laminate, including an innermost heat sealable polymer layer 37-3, passes a third extruder feedblock 38-2 and a lamination nip 38-1, where an outermost heat sealable layer of LDPE 22; 38-3 is coated onto the outer side of the paper layer. This latter step may also be performed as a first extrusion coating operation before lamination at 36 or 37-1, according to an alternative embodiment. The finished packaging laminate 39 is finally wound onto a storage reel, not shown.

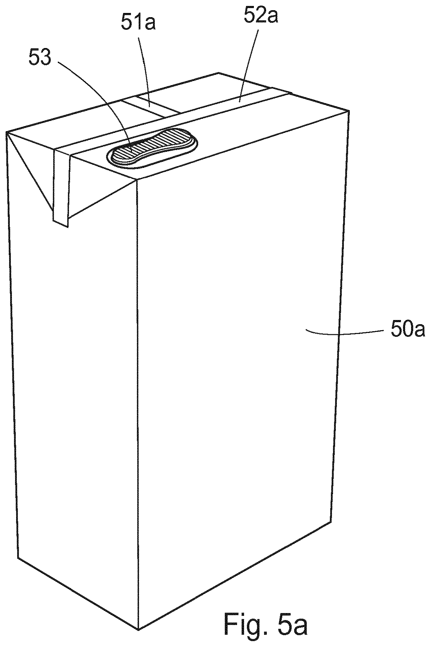

Fig. 5a shows an embodiment of a packaging container 50a produced from the packaging laminate 20 according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the half-folded packaging container is still is easy to handle and dimensionally stable when put on a shelf in the food store or on a table or the like.

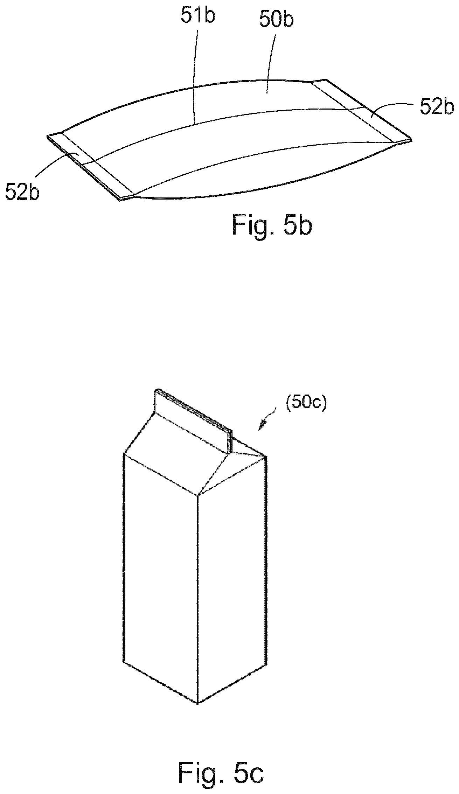

Fig. 5b shows an alternative, preferred example of a packaging container 50b produced from an alternative packaging laminate 20 according to the invention. The alternative packaging laminate is thinner by having a thinner paper bulk layer 21, and thus it is not dimensionally stable enough to form a parallellepipedic or wedge-shaped packaging container, and is not fold formed after transversal sealing 52b. It will thus remain a pillow-shaped pouch-like container and be distributed and sold in this form.

Fig. 5c shows a gable top package 50c, which is fold-formed from a pre-cut sheet or blank, from the laminated packaging material comprising a bulk layer of paperboard and the durable barrier film of the invention. Also flat top packages may be formed from similar blanks of material.

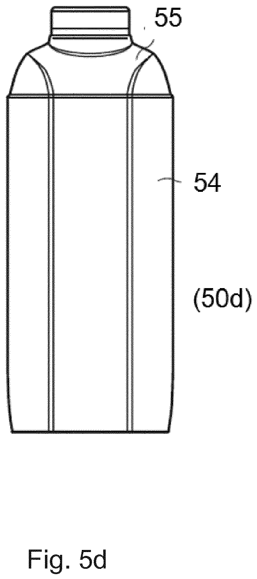

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages are for example marketed under the trade names of Tetra Top^{®} and Tetra Evero^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

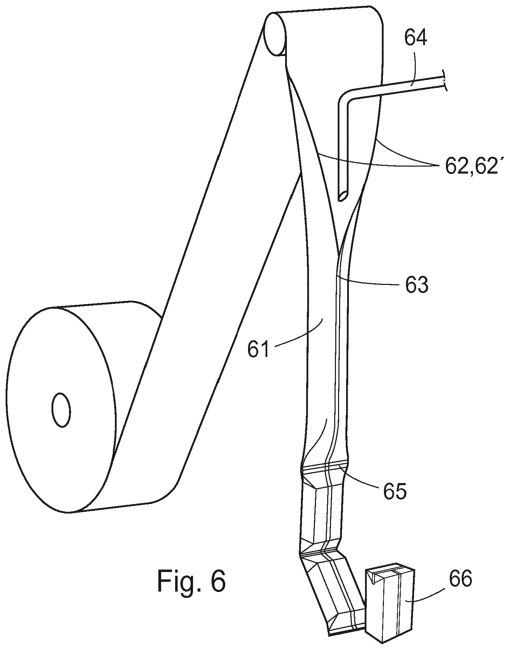

Fig. 6 shows the principle as described in the introduction of the present application, i.e. a web of packaging material is formed into a tube 61 by the longitudinal edges 62 of the web being united to one another in an overlap joint 63. The tube is filled 64 with the intended liquid food product and is divided into individual packages by repeated transversal seals 65 of the tube at a pre-determined distance from one another below the level of the filled contents in the tube. The packages 66 are separated by incisions in the transversal seals and are given the desired geometric configuration by fold formation along prepared crease lines in the material.

As a final remark, the invention is not limited by the embodiments shown and described above, but may be varied within the scope of the claims.

## Claims

1. Laminated packaging material (10a, 10b, 10d; 20a, 20c), for packaging of liquid food products, comprising a bulk layer (11;21) of paper or paperboard or other cellulose-based material, a first outermost liquid tight, heat sealable thermoplastic layer (12;22), arranged on the outside of the bulk layer to constitute the outside of a package formed from the packaging material, a second innermost liquid tight, heat sealable thermoplastic layer (13;23) arranged on the inside of the bulk layer to be in direct contact with the filled food product, and a barrier layer (14;24) comprising a polyester selected from the group consisting of polyethylene-2,5-furandicarboxylate (PEF) and polytrimethylene furandicarboxylate (PTF), a blend and a co-polymer thereof, laminated between the bulk layer and the second, innermost liquid tight, heat sealable thermoplastic layer, wherein the barrier layer (14;24) is laminated to an adhesion-promoting layer, forming part of a laminating layer (15, 16a, 25), which is bonding the barrier layer (14; 24) to the bulk layer (11; 21) and the adhesion-promoting layer comprising a blend of a thermoplastic polymer with an epoxidized natural oil, an epoxidized natural rubber or a cyclic carbonate derivative of an epoxidized natural oil or rubber.

2. Laminated packaging material as claimed in claim 1, wherein the barrier layer (14;24) is a pre-manufactured, bi- or mono-axially oriented barrier film, comprising said polyester or blend of polyesters.

3. Laminated packaging material as claimed claim 2, wherein the oriented barrier film (14;24) is mono-axially stretched at a ratio from 2,2 to 5, such as from 3,5 to 4,5, or biaxially stretched at a ratio from 2,2 to 5, such as from 3,5 to 4,5, in each direction.

4. Laminated packaging material as claimed in any one of the preceding claims, wherein the thickness of the barrier layer (14;24) is from 8 to 20 µm.

5. Laminated packaging material as claimed in any one of the preceding claims, wherein the barrier layer (14;24) is further laminated to an adhesion-promoting layer, forming a second bonding layer (16) to the innermost, liquid tight, heat sealable layer of thermoplastic polymer (13).

6. Laminated packaging material as claimed in any one of the preceding claims, wherein the barrier layer (14;24) has been treated on at least one side with a reactive plasma gas to promote adhesion to an adjacent laminating layer (15;16a; 25) or innermost, liquid tight, heat sealable layer (13; 16) of a thermoplastic polymer.

7. Laminated packaging material as claimed in any one of the preceding claims, wherein the adhesion-promoting layer(s) (15,16,16a; 25) is a blend of a polyolefin with an epoxidized compound selected from the group consisting of epoxidized natural oil, such as an epoxidized soy bean oil (ESBO) or epoxidized linseed oil (ELO), epoxidized natural rubber and a cyclic carbonate derivative of an epoxidized natural oil or natural rubber, at an amount of from 0.1 to 0.5 wt % of the total adhesion-promoting layer.

8. Laminated packaging material as claimed in any one of the preceding claims, wherein the thermoplastic polymer of the second innermost liquid tight, heat sealable thermoplastic layer (13;23) is a polyolefin, such as a polyethylene or a polypropylene homo- or copolymer.

9. Laminated packaging material as claimed in any one of the preceding claims, wherein the thermoplastic polymer of the laminating layer (15;16a;25) is a blend of a polyolefin with an epoxidized compound selected from the group consisting of an epoxidized natural oil, such as an epoxidized soy bean oil (ESBO) or epoxidized linseed oil (ELO), an epoxidized natural rubber and a cyclic carbonate derivative of an epoxidized natural oil or natural rubber.

10. Method of manufacturing the laminated packaging material as claimed in any one of claims 1-9, comprising the steps, in any order, of
providing a bulk layer (11;21) of paper or paperboard or other cellulose-based material,
applying a first outermost liquid tight, heat sealable thermoplastic layer (12;22) onto the outer side of the bulk layer,
laminating (36) a barrier layer (14;24) comprising a polyester selected from the group consisting of polyethylene-2,5-furandicarboxylate (PEF), polytrimethylene furandicarboxylate/ furanoate (PTF), a blend or a co-polymer thereof, to the inner side of the bulk layer (11;21) of paper or paperboard or other cellulose-based material, by melt (co-)extruding (35) an interjacent laminating layer (15;25) of a thermoplastic polymer between the bulk layer and the barrier layer, wherein the barrier layer (14;24) is laminated to an adhesion-promoting layer, forming part of the laminating layer (15, 16a, 25), which is bonding the barrier layer (14; 24) to the bulk layer (11; 21), the adhesion-promoting layer comprising a blend of a thermoplastic polymer with an epoxidized natural oil, an epoxidized natural rubber or a cyclic carbonate derivative of an epoxidized natural oil or rubber, and pressing together, and
applying a second innermost liquid tight, heat sealable thermoplastic layer (13;23) on the inner side of the barrier layer (14;24).

11. Method as claimed in claim 10, wherein the interjacent laminating layer (15;25) of a thermoplastic polymer is melt co-extruded together with one or more further thermoplastic polymer layers, and the thermoplastic polymer layer to contact the barrier layer (14;24) is an adhesion-promoting polymer layer (16a).

12. Method as claimed in any one of claims 10-11, wherein the second innermost liquid tight, heat sealable thermoplastic layer (13;23) is applied on the inner side of the barrier layer (14;24), by means of melt extrusion, or melt co-extrusion together with an adhesion-promoting polymer layer, (16;25) to contact the barrier layer (14;24), the adhesion-promoting layer comprising a blend of a thermoplastic polymer with an epoxidized natural oil, an epoxidized natural rubber or a cyclic carbonate derivative of an epoxidized natural oil or rubber.

13. Packaging container (50a; 50b; 50c; 50d) comprising the laminated packaging material as defined in any one of claims 1-9.

## Patentansprüche

1. Laminiertes Verpackungsmaterial (10a, 10b, 10d; 20a, 20c) zum Verpacken von flüssigen Nahrungsmittelprodukten, umfassend eine Massenschicht (11; 21) aus Papier oder Pappe oder anderem Material auf Cellulosebasis, eine erste äußerste flüssigkeitsdichte heißsiegelbare thermoplastische Schicht (12; 22), die auf der Außenseite der Massenschicht angeordnet ist, um die Außenseite einer Packung zu bilden, die aus dem Verpackungsmaterial gebildet ist, eine zweite innerste flüssigkeitsdichte heißsiegelbare thermoplastische Schicht (13; 23), die auf der Innenseite der Massenschicht angeordnet ist, um in direktem Kontakt mit dem eingefüllten Nahrungsmittelprodukt zu sein, und eine Sperrschicht (14; 24), die einen Polyester ausgewählt aus der Gruppe bestehend aus Polyethylen-2,5-furandicarboxylat (PEF) und Polytrimethylenfurandicarboxylat (PTF), einem Gemisch und einem Copolymer davon umfasst, die zwischen der Massenschicht und der zweiten innersten flüssigkeitsdichten heißsiegelbaren thermoplastischen Schicht laminiert ist, wobei die Sperrschicht (14; 24) an eine adhäsionsfördernde Schicht laminiert ist, die Teil einer Laminierungsschicht (15, 16a, 25) bildet, welche die Sperrschicht (14; 24) an die Massenschicht (11; 21) bondet, und wobei die adhäsionsfördernde Schicht ein Gemisch aus einem thermoplastischen Polymer mit einem epoxidierten natürlichen Öl, einem epoxidierten Naturkautschuk oder einem cyclischen Carbonatderivat eines epoxidierten natürlichen Öls oder Kautschuks umfasst.

2. Laminiertes Verpackungsmaterial nach Anspruch 1, wobei die Sperrschicht (14; 24) ein vorgefertigter bi- oder monoaxial orientierter Sperrfilm ist, der den Polyester oder das Gemisch von Polyestern umfasst.

3. Laminiertes Verpackungsmaterial nach Anspruch 2, wobei der orientierte Sperrfilm (14; 24) in einem Verhältnis von 2,2 bis 5, wie von 3,5 bis 4,5 monoaxial gereckt ist, oder in einem Verhältnis von 2,2 bis 5, wie von 3,5 bis 4,5 in jeder Richtung biaxial gereckt ist.

4. Laminiertes Verpackungsmaterial nach einem der vorhergehenden Ansprüche, wobei die Dicke der Sperrschicht (14; 24) 8 bis 20 µm beträgt.

5. Laminiertes Verpackungsmaterial nach einem der vorhergehenden Ansprüche, wobei die Sperrschicht (14; 24) des Weiteren an eine adhäsionsfördernde Schicht laminiert ist, wodurch eine zweite Bondingschicht (16) an der innersten flüssigkeitsdichten heißsiegelbaren Schicht aus thermoplastischem Polymer (13) gebildet wird.

6. Laminiertes Verpackungsmaterial nach einem der vorhergehenden Ansprüche, wobei die Sperrschicht (14; 24) auf mindestens einer Seite mit einem reaktiven Plasmagas behandelt worden ist, um Adhäsion an einer benachbarten Laminierungsschicht (15; 16a; 25) oder einer innersten flüssigkeitsdichten heißsiegelbaren Schicht (13; 16) aus einem thermoplastischen Polymer zu fördern.

7. Laminiertes Verpackungsmaterial nach einem der vorhergehenden Ansprüche, wobei die adhäsionsfördernde (n) Schicht (en) (15, 16, 16a; 25) ein Gemisch aus einem Polyolefin mit einer epoxidierten Verbindung ausgewählt aus der Gruppe bestehend aus epoxidiertem natürlichem Öl, wie epoxidiertem Sojaöl (ESBO) oder epoxidiertem Leinöl (ELO), epoxidiertem Naturkautschuk und einem cyclischen Carbonatderivat eines epoxidierten natürlichen Öls oder Naturkautschuks in einer Menge von 0,1 bis 0,5 Gew.% der gesamten adhäsionsfördernden Schicht ist bzw. sind.

8. Laminiertes Verpackungsmaterial nach einem der vorhergehenden Ansprüche, wobei das thermoplastische Polymer der zweiten innersten flüssigkeitsdichten heißsiegelbaren thermoplastischen Schicht (13; 23) ein Polyolefin ist, wie ein Polyethylen oder ein Polypropylenhomo- oder -copolymer.

9. Laminiertes Verpackungsmaterial nach einem der vorhergehenden Ansprüche, wobei das thermoplastische Polymer der Laminierungsschicht (15; 16a; 25) ein Gemisch aus einem Polyolefin mit einer epoxidierten Verbindung ausgewählt aus der Gruppe bestehend aus epoxidiertem natürlichem Öl, wie epoxidiertem Sojaöl (ESBO) oder epoxidiertem Leinöl (ELO), einem epoxidierten Naturkautschuk und einem cyclischen Carbonatderivat eines epoxidierten natürlichen Öls oder Naturkautschuks ist.

10. Verfahren zur Fertigung des laminierten Verpackungsmaterials nach einem der Ansprüche 1 bis 9, umfassend die folgenden Schritte in beliebiger Reihenfolge:
Bereitstellen einer Massenschicht (11; 21) aus Papier oder Pappe oder anderem Material auf Cellulosebasis,
Aufbringen einer ersten äußersten flüssigkeitsdichten heißsiegelbaren thermoplastischen Schicht (12; 22) auf der äußeren Seite der Massenschicht,
Laminieren (36) einer Sperrschicht (14; 24), umfassend einen Polyester ausgewählt aus der Gruppe bestehend aus Polyethylen-2,5-furandicarboxylat (PEF),
Polytrimethylenfurandicarboxylat/-furanoat (PTF), einem Gemisch oder Copolymer davon, an die innere Seite der Massenschicht (11; 21) aus Papier oder Pappe oder anderem Material auf Cellulosebasis durch Schmelz(co)extrudieren (35) einer dazwischenliegenden Laminierungsschicht (15; 25) aus einem thermoplastischen Polymer zwischen die Massenschicht und die Sperrschicht, wobei die Sperrschicht (14; 24) an eine adhäsionsfördernde Schicht laminiert ist, die Teil der Laminierungsschicht (15, 16a, 25) bildet, welche die Sperrschicht (14; 24) an die Massenschicht (11; 21) bondet, wobei die adhäsionsfördernde Schicht ein Gemisch aus einem thermoplastischen Polymer mit einem epoxidierten natürlichen Öl, einem epoxidierten Naturkautschuk oder einem cyclischen Carbonatderivat eines epoxidierten natürlichen Öls oder Naturkautschuks umfasst, und Zusammenpressen und
Aufbringen einer zweiten innersten flüssigkeitsdichten heißsiegelbaren thermoplastischen Schicht (13; 23) auf die innere Seite der Sperrschicht (14; 24).

11. Verfahren nach Anspruch 10, wobei die dazwischenliegende Laminierungsschicht (15; 25) aus einem thermoplastischen Polymer zusammen mit einem oder mehreren weiteren thermoplastischen Polymerschichten schmelzcoextrudiert wird und die thermoplastische Polymerschicht, welche die Sperrschicht (14; 24) kontaktieren soll, eine adhäsionsfördernde Polymerschicht (16a) ist.

12. Verfahren nach einem der Ansprüche 10 bis 11, wobei die zweite innerste flüssigkeitsdichte heißsiegelbare thermoplastische Schicht (13; 23) auf die innere Seite der Sperrschicht (14; 24) mittels Schmelzextrusion oder Schmelzcoextrusion zusammen mit einer adhäsionsfördernde Polymerschicht (16; 25) aufgebracht wird, welche die Sperrschicht (14; 24) kontaktieren soll, wobei die adhäsionsfördernde Schicht ein Gemisch aus einem thermoplastischen Polymer mit einem epoxidierten natürlichen Öl, einem epoxidierten Naturkautschuk oder einem cyclischen Carbonatderivat von einem epoxidierten natürlichen Öl oder Naturkautschuk umfasst.

13. Verpackungsbehälter (50a; 50b; 50c; 50d), umfassend das laminierte Verpackungsmaterial gemäß einem der Ansprüche 1 bis 9.

## Revendications

1. Matériau d'emballage stratifié (10a, 10b, 10d ; 20a, 20c), pour l'emballage de produits alimentaires liquides, comprenant une couche massive (11 ; 21) de papier ou de carton ou d'un autre matériau à base de cellulose, une première couche thermoplastique thermoscellable étanche aux liquides la plus à l'extérieur (12 ; 22), agencée sur l'extérieur de la couche massive pour constituer l'extérieur d'un emballage formé à partir du matériau d'emballage, une deuxième couche thermoplastique thermoscellable étanche aux liquides la plus à l'intérieur (13 ; 23) agencée sur l'intérieur de la couche massive pour être en contact direct avec le produit alimentaire rempli, et une couche barrière (14 ; 24) comprenant un polyester choisi dans le groupe constitué par un poly(2,5-furannedicarboxylate d'éthylène) (PEF) et un poly(furannedicarboxylate de triméthylène) (PTF), un mélange et un co-polymère correspondant, stratifiée entre la couche massive et la deuxième couche thermoplastique thermoscellable étanche aux liquides la plus à l'intérieur, la couche barrière (14 ; 24) étant stratifiée sur une couche favorisant l'adhérence, formant partie d'une couche de stratification (15, 16a, 25), qui lie la couche barrière (14 ; 24) à la couche massive (11 ; 21) et la couche favorisant l'adhérence comprenant un mélange d'un polymère thermoplastique avec une huile naturelle époxydée, un caoutchouc naturel époxydé ou un dérivé de carbonate cyclique d'une huile ou d'un caoutchouc naturel(le) époxydé(e).

2. Matériau d'emballage stratifié selon la revendication 1, la couche barrière (14 ; 24) étant un film barrière pré-fabriqué, orienté de manière biaxiale ou monoaxiale, comprenant ledit polyester ou mélange de polyesters.

3. Matériau d'emballage stratifié selon la revendication 2, le film barrière orienté (14 ; 24) étant étiré de manière monoaxiale à raison d'un rapport de 2,2 à 5, tel que de 3,5 à 4,5, ou étiré de manière biaxiale à raison d'un rapport de 2,2 à 5, tel que de 3,5 à 4,5, dans chaque direction.

4. Matériau d'emballage stratifié selon l'une quelconque des revendications précédentes, l'épaisseur de la couche barrière (14 ; 24) étant de 8 à 20 µm.

5. Matériau d'emballage stratifié selon l'une quelconque des revendications précédentes, la couche barrière (14 ; 24) étant en outre stratifiée sur une couche favorisant l'adhérence, formant une deuxième couche de liaison (16) à la couche thermoscellable, étanche aux liquides, la plus à l'intérieur de polymère thermoplastique (13).

6. Matériau d'emballage stratifié selon l'une quelconque des revendications précédentes, la couche barrière (14 ; 24) ayant été traitée sur au moins un côté avec un gaz au plasma réactif pour favoriser l'adhérence à une couche de stratification adjacente (15 ; 16a ; 25) ou une couche thermoscellable, étanche aux liquides, la plus à l'intérieur (13 ; 16) d'un polymère thermoplastique.

7. Matériau d'emballage stratifié selon l'une quelconque des revendications précédentes, la ou les couches favorisant l'adhérence (15, 16, 16a ; 25) étant un mélange d'une polyoléfine avec un composé époxydé choisi dans le groupe constitué par une huile naturelle époxydée, telle qu'une huile de fèves de soja époxydée (ESBO) ou une huile de graines de lin époxydée (ELO), un caoutchouc naturel époxydé et un dérivé carbonate cyclique d'une huile naturelle ou d'un caoutchouc naturel époxydé(e), à raison d'une quantité allant de 0,1 à 0,5 % en poids de la couche totale favorisant l'adhérence.

8. Matériau d'emballage stratifié selon l'une quelconque des revendications précédentes, le polymère thermoplastique de la deuxième couche thermoplastique thermoscellable étanche aux liquides la plus à l'intérieur (13 ; 23) étant une polyoléfine, telle qu'un polyéthylène ou un homopolymère ou copolymère de polypropylène.

9. Matériau d'emballage stratifié selon l'une quelconque des revendications précédentes, le polymère thermoplastique de la couche de stratification (15 ; 16a ; 25) étant un mélange d'une polyoléfine avec un composé époxydé choisi dans le groupe constitué par une huile naturelle époxydée, telle qu'une huile de fèves de soja époxydée (ESBO) ou une huile de graines de lin époxydée (ELO), un caoutchouc naturel époxydé et un dérivé carbonate cyclique d'une huile naturelle ou d'un caoutchouc naturel époxydé(e).

10. Procédé de fabrication du matériau d'emballage stratifié selon l'une quelconque des revendications 1 à 9, comprenant les étapes, dans un ordre quelconque, de mise à disposition d'une couche massive (11 ; 21) de papier ou de carton ou d'un autre matériau à base de cellulose,
application d'une première couche thermoplastique thermoscellable étanche aux liquides la plus à l'extérieur (12 ; 22) sur le côté extérieur de la couche massive,
stratification (36) d'une couche barrière (14 ; 24) comprenant un polyester choisi dans le groupe constitué par un poly(2,5-furannedicarboxylate d'éthylène) (PEF) et un poly(furannedicarboxylate de triméthylène) (PTF), un mélange et un co-polymère correspondant, sur le côté intérieur de la couche massive (11 ; 21) de papier ou de carton ou d'un autre matériau à base de cellulose, par (co-)extrusion (35) en fusion d'une couche de stratification intermédiaire (15 ; 25) d'un polymère thermoplastique entre la couche massive et la couche barrière, la couche barrière (14 ; 24) étant stratifiée sur une couche favorisant l'adhérence, formant partie d'une couche de stratification (15, 16a, 25), qui lie la couche barrière (14 ; 24) à la couche massive (11 ; 21), la couche favorisant l'adhérence comprenant un mélange d'un polymère thermoplastique avec une huile naturelle époxydée, un caoutchouc naturel époxydé ou un dérivé de carbonate cyclique d'une huile ou d'un caoutchouc naturel(le) époxydé(e), et pressage ensemble, et
application d'une deuxième couche thermoplastique thermoscellable étanche aux liquides la plus à l'intérieur (13 ; 23) sur le côté intérieur de la couche barrière (14 ; 24).

11. Procédé selon la revendication 10, la couche de stratification intermédiaire (15 ; 25) d'un polymère thermoplastique étant co-extrudée en fusion ensemble avec une ou plusieurs couches de polymère thermoplastique supplémentaires, et la couche de polymère thermoplastique devant être en contact avec la couche barrière (14 ; 24) étant une couche de polymère favorisant l'adhérence (16a).

12. Procédé selon l'une quelconque des revendications 10 et 11, la deuxième couche thermoplastique thermoscellable étanche aux liquides la plus à l'intérieur (13 ; 23) étant appliquée sur le côté intérieur de la couche barrière (14 ; 24), au moyen d'une extrusion en fusion, ou d'une co-extrusion en fusion avec une couche de polymère favorisant l'adhérence, (16 ; 25) pour être en contact avec la couche barrière (14 ; 24), la couche favorisant l'adhérence comprenant un mélange d'un polymère thermoplastique avec une huile naturelle époxydée, un caoutchouc naturel époxydé ou un dérivé de carbonate cyclique d'une huile ou d'un caoutchouc naturel(le) époxydé(e) .

13. Récipient d'emballage (50a ; 50b ; 50c ; 50d) comprenant le matériau d'emballage stratifié tel que défini dans l'une quelconque des revendications 1 à 9.
